# EUROPEAN PATENT APPLICATION

(11) **EP 3 312 732 A1**
(43) Date of publication of application: **25.04.2018**
(21) Application number: 16811847.9
(22) Date of filing: 02.06.2016
(51) Int. Cl.: G06F 15/16, G06F 17/30

(54) **CONSTRUCTION MACHINE DATA PROCESSING METHOD, DEVICE FOR PERFORMING SAME, CONSTRUCTION MACHINE DATA PROCESSING SERVER, AND CONSTRUCTION MACHINE DATA PROCESSING UNIT**

(30) Priority: 18.06.2015 KR 20150086404
(71) Applicant: Doosan Infracore Co., Ltd., Incheon 401-702 (KR)
(72) Inventor: KIM, Dong-eun, Incheon 401-702 (KR)
(74) Representative: Isarpatent
(86) International application number: PCT/KR2016/005833
(87) International publication number: WO 2016/204434

(57) **Abstract**

In a method of processing data of a construction machine, a configuration file may be generated from master data of the construction machine stored in a server. The configuration file may be transmitted to the construction machine to share the configuration file between the server and the construction machine. New data of the construction machine may be selectively collected using the configuration file. The collected data may be transmitted to the server. Thus, the server and the data processor may share the configuration file generated from the master data of the construction machine with each other so that one kind of the data-collecting unit and the software may be commonly applied to all of the construction machines.

## Description

### BACKGROUND

### 1. Field

Example embodiments relate to a method of processing data of a construction machine, an apparatus for performing the same, a server for processing data of a construction machine, and a data processor of a construction machine. More particularly, example embodiments relate to a method of collecting, processing, transmitting and managing data of data in order to remotely control a construction machine, an apparatus for performing the method, a server for processing data of a construction machine, and a data processor of a construction machine.

### 2. Description of the Related Art

Generally, a construction machine such as an excavator may include a data processor communicated with a server. The data processor may transmit information of the construction machine such as position information to the server using various communication devices. Further, the data processor may receive information from the server.

According to related arts, the data processor may be dependent upon diagnosis data. The data processor unit may have function as to merely transmit the data. Thus, when new data may be required, changing of a data collection way in order to form information of the data may be required, or the data collection way of the construction machine may not be compatible with a data collection way of a new construction machine, a new data processor configured to meet the above-mentioned requirements may be developed. Further, various confliction needs with respect to the data and the information by users may be increased. A change period of the needs may become faster.

In order to respond the above-mentioned requirements, a software in the data processor of the construction machine may be updated using a cable communication or a wireless communication. However, costs including communication resources, human resources, management resources for managing the software, etc., may be increased. As a result, the needs with respect to the rapidly changed data may not be properly satisfied.

### SUMMARY

Example embodiments provide a method of processing data of a construction machine that may be capable of easily selecting and obtaining data required by a user using a method of setting kinds of the data, a data collection time, a data transmission time, a data-processing time, etc., and a method of managing the data without an excessive communication cost in order to update a massive software.

Example embodiments also provide an apparatus for performing the above-mentioned method.

Example embodiments still also provide a server for processing data of a construction machine that may be capable of performing the above-mentioned method.

Example embodiments yet still also provide a data processor of a construction machine for performing the above-mentioned method.

According to example embodiments, there may be provided a method of processing data of a construction machine. In the method of processing the data of the construction machine, a configuration file may be generated from master data of the construction machine stored in a server. The configuration file may be transmitted to the construction machine to share the configuration file between the server and the construction machine. New data of the construction machine may be selectively collected using the configuration file. The collected data may be transmitted to the server.

In example embodiments, generating the configuration file may include selecting data among the master data, processing the selected data, grouping the processing data, and setting a prior order of the grouped data to be transmitted to the construction machine.

In example embodiments, collecting the new data of the construction machine may include selecting data among the new data of the construction machine, setting a collection condition of the data, processing the data in accordance with the collection condition, and setting a prior order of the processed data to be transmitted to the server.

In example embodiments, the collected data may be selected in accordance with kinds of the data, encoding/decoding ways of the data, and collection positions of the data.

In example embodiments, the data collection condition may include a data collection period.

In example embodiments, processing the data may include decoding the data, calculating a maximum value and a minimum value among the data, and calculating an average value of the data.

In example embodiments, collecting the new data of the construction machine may include combining the collected data to form a message.

In example embodiments, the master data may include an inherent identification (ID) number of the data of the construction machine, a source of the data, data format, encoding information of the data, etc.

According to example embodiments, there may be provided an apparatus for processing data of a construction machine. The apparatus may include a server and a data processor. The server may be configured to generate a configuration file from a master data of the construction machine. The server may be configured to transmit the configuration file to the construction machine. The data processor may be installed at the construction machine. The data processor unit may be configured to share the configuration file with the server. The data processor unit may be configured to process new data of the construction machine using the configuration file. The data processor unit may be configured to transmit the processed new data to the server.

In example embodiments, the server may include an editing unit configured to generate the configuration file, a transmitting unit configured to transmit the configuration file to the construction machine, a receiving unit configured to receive the new data of the construction machine, and a storing unit configured to store the master data, the configuration file and the new data.

In example embodiments, the editing unit may include a data-selecting member configured to select collected data among the master data, a data-processing member configured to process the selected data, a data-classifying member configured to group the processes data, and a transmission-setting member configured to set a prior order of the grouped data to be transmitted to the data-processing unit.

In example embodiments, the data processor may include a receiving unit configured to receive the configuration file, a processing unit configured to process the new data of the construction machine using the configuration file, and a transmitting unit configured to transmit the processed data to the server.

In example embodiments, the processing unit may include a data-selecting member configured to select collected data among the new data of the construction machine, a data collection condition-setting member configured to setting a data collection condition, and a data process-setting member configured to setting a process way of the data selected in accordance with the collection condition.

In example embodiments, the data-selecting member may select kinds of the data, encoding/decoding ways of the data, and collection positions of the data.

In example embodiments, the data collection condition-setting member may set a data collection period.

In example embodiments, the data process-setting member may be configured to decode the data, calculate a maximum value and a minimum value among the data, and calculate an average value of the data.

In example embodiments, the processing unit may include a message-setting member configured to combining the collected data to form a message.

In example embodiments, the processing unit may further include a transmission-setting member configured to set a prior order of the selected data to be transmitted to the server.

According to example embodiments, there may be provided a server for processing data of a construction machine. The server may include an editing unit, a transmitting unit, a receiving unit and a storing unit. The editing unit may be configured to generate the configuration file. The transmitting unit may be configured to transmit the configuration file to the construction machine to share the configuration file between the server and the construction machine. The receiving unit may be configured to receive the new data of the construction machine. The storing unit may be configured to store the master data, the configuration file and the new data.

In example embodiments, the editing unit may include a data-selecting member configured to select collected data among the master data, a data-processing member configured to process the selected data, a data-classifying member configured to group the processes data, and a transmission-setting member configured to set a prior order of the grouped data to be transmitted to the data-processing unit.

According to example embodiments, there may be provided a data processor of a construction machine. The data processor may include a receiving unit, a processing unit and a transmitting unit. The receiving unit may be configured to receive the configuration file. The processing unit may be configured to process the new data of the construction machine using the configuration file. The transmitting unit configured to transmit the processed data to the server.

In example embodiments, the processing unit may include a data-selecting member configured to select collected data among the new data of the construction machine, a data collection condition-setting member configured to setting a data collection condition, and a data process-setting member configured to setting a process way of the data selected in accordance with the collection condition.

In example embodiments, the data-selecting member may select kinds of the data, encoding/decoding ways of the data, and collection positions of the data.

In example embodiments, the data collection condition-setting member may set a data collection period.

In example embodiments, the data process-setting member may be configured to decode the data, calculate a maximum value and a minimum value among the data, and calculate an average value of the data.

In example embodiments, the processing unit may include a message-setting member configured to combining the collected data to form a message.

In example embodiments, the processing unit may further include a transmission-setting member configured to set a prior order of the selected data to be transmitted to the server.

According to example embodiments, the server and the data processor may share the configuration file generated from the master data of the construction machine with each other. Thus, one kind of the data-collecting unit and the software may be commonly applied to all of the construction machines. As a result, a communication cost, a management cost, a software cost used for updating the software may be remarkably reduced. Further, the data collection may use the configuration file reflecting user's needs so that desired data may be individually obtained to rapidly meet the various requirements of the user.

### BRIEF DESCRIPTION OF THE DRAWINGS

Example embodiments will be more clearly understood from the following detailed description taken in conjunction with the accompanying drawings. FIGS. 1 to 6 represent non-limiting, example embodiments as described herein.
FIG. 1 is a block diagram illustrating an apparatus for processing data of a construction machine in accordance with example embodiments;
FIG. 2 is a block diagram illustrating an editing unit of the apparatus in FIG. 1;
FIG. 3 is a block diagram illustrating a data processor of the apparatus in FIG. 1;
FIG. 4 is a flow chart illustrating a method of processing data of a construction machine using the apparatus in FIG. 1;
FIG. 5 is a flow chart illustrating a method of generating a configuration file in the flow chart of FIG. 4; and
FIG. 6 is a flow chart illustrating a method of collecting new data of a construction machine using a configuration file in the flow chart of FIG. 4.

### DETAILED DESCRIPTION OF THE EMBODIMENTS

Various example embodiments will be described more fully hereinafter with reference to the accompanying drawings, in which some example embodiments are shown. The present invention may, however, be embodied in many different forms and should not be construed as limited to the example embodiments set forth herein. Rather, these example embodiments are provided so that this disclosure will be thorough and complete, and will fully convey the scope of the present invention to those skilled in the art. In the drawings, the sizes and relative sizes of layers and regions may be exaggerated for clarity.

It will be understood that when an element or layer is referred to as being "on," "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the term "and/or" includes any and all combinations of one or more of the associated listed items.

It will be understood that, although the terms first, second, third etc. may be used herein to describe various elements, components, regions, layers and/or sections, these elements, components, regions, layers and/or sections should not be limited by these terms. These terms are only used to distinguish one element, component, region, layer or section from another region, layer or section. Thus, a first element, component, region, layer or section discussed below could be termed a second element, component, region, layer or section without departing from the teachings of the present invention.

Spatially relative terms, such as "beneath," "below," "lower," "above," "upper" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" the other elements or features. Thus, the exemplary term "below" can encompass both an orientation of above and below. The device may be otherwise oriented (rotated 90 degrees or at other orientations) and the spatially relative descriptors used herein interpreted accordingly.

The terminology used herein is for the purpose of describing particular example embodiments only and is not intended to be limiting of the present invention. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Example embodiments are described herein with reference to cross-sectional illustrations that are schematic illustrations of idealized example embodiments (and intermediate structures). As such, variations from the shapes of the illustrations as a result, for example, of manufacturing techniques and/or tolerances, are to be expected. Thus, example embodiments should not be construed as limited to the particular shapes of regions illustrated herein but are to include deviations in shapes that result, for example, from manufacturing. For example, an implanted region illustrated as a rectangle will, typically, have rounded or curved features and/or a gradient of implant concentration at its edges rather than a binary change from implanted to non-implanted region. Likewise, a buried region formed by implantation may result in some implantation in the region between the buried region and the surface through which the implantation takes place. Thus, the regions illustrated in the figures are schematic in nature and their shapes are not intended to illustrate the actual shape of a region of a device and are not intended to limit the scope of the present invention.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, example embodiments will be explained in detail with reference to the accompanying drawings.

### Apparatus for Processing Data of a Construction Machine

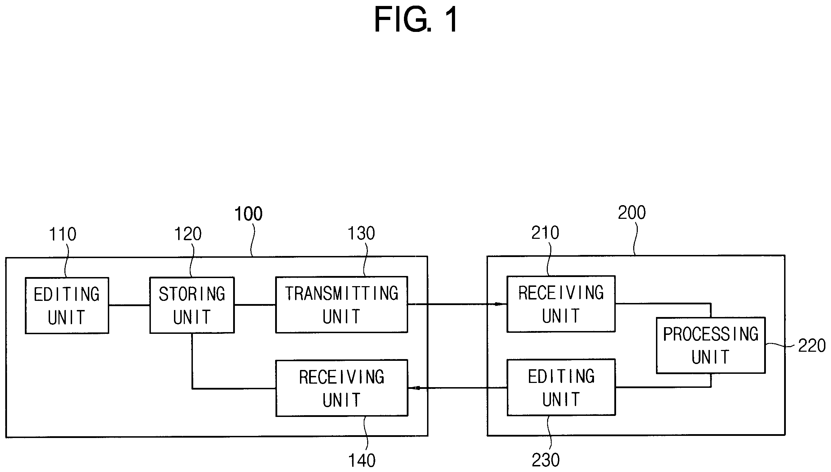

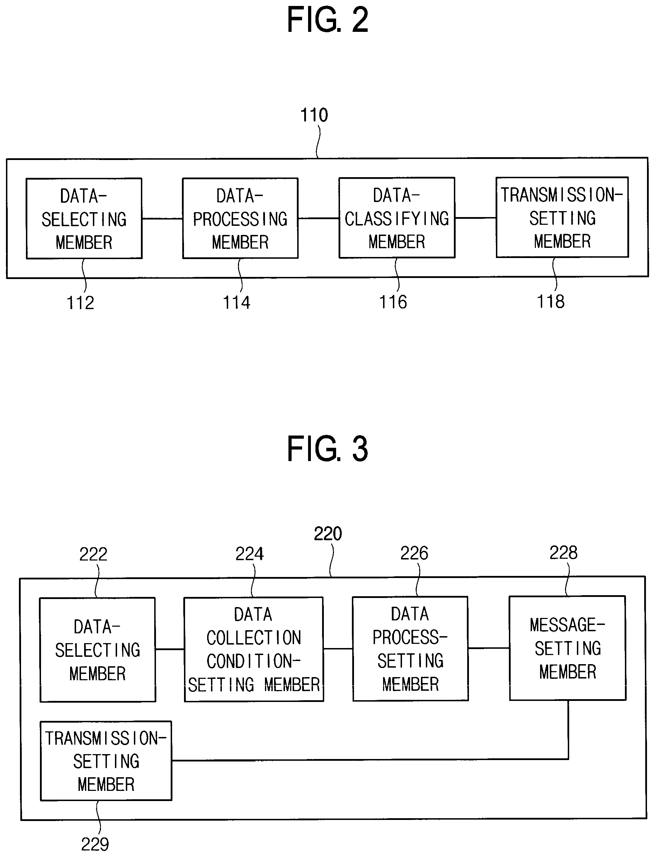

FIG. 1 is a block diagram illustrating an apparatus for processing data of a construction machine in accordance with example embodiments, FIG. 2 is a block diagram illustrating an editing unit of the apparatus in FIG. 1, and FIG. 3 is a block diagram illustrating a data processor of the apparatus in FIG. 1.

Referring to FIGS. 1 to 3, an apparatus for processing data of a construction machine in accordance with example embodiments may include a server 100 and a data processor 200. The data processor 200 may be installed at each of the construction machines. The server 100 may be wireless communicated with the data processor 200. Thus, the server 100 may transmit data to the data processor 200. Further, the data processor 200 may transmit new data to the server 100.

The server 100 may include an editing unit 110, a storing unit 120, a transmitting unit 130 and a receiving unit 140. The editing unit 110 may be configured to generate a configuration file from master data stored in the storing unit 120. The master data may include data collected from the construction machine. For example, the master data may include an inherent identification (ID) number, a source of the data, data format, encoding information of the data, etc. The data processor 200 may use the configuration file, which may be generated from the master data, for collecting the new data of the construction machine.

The editing unit 110 may include a data-selecting member 112, a data-processing member 114, a data-classifying member 116 and a transmission-setting member 118. The data-selecting member 112 may be configured to select data collected from the master data. The data-processing member 114 may be configured to process the data selected by the data-selecting member 112. The data-classifying member 116 may be configured to group the data processed by the data-processing member 114. The transmission-setting member 118 may be configured to set a prior order of the data classified by the data-classifying member 116 to be transmitted to the data processor 200.

The transmitting unit 130 may be configured to transmit the configuration file generated by the editing unit 110 to the data processor 200. Thus, the server 100 and the data processor 200 may share the configuration file with each other. The receiving unit 140 may be configured to receive the new data of the construction machine collected by the data processor 200. The storing unit 120 may be configured to store the received new data.

The data processor 200 may be configured to select collected data among the new data of the construction machine using the configuration file transmitted from the server 100. The data processor 200 may include a receiving unit 210, a processing unit 220 and a transmitting unit 230. The processing unit 220 may be generated by the configuration file transmitted from the server 100.

The receiving unit 210 may be configured to receive the configuration file transmitted from the transmitting unit 130 of the server 100. Thus, the data processor 200 and the server 100 may share the configuration file generated by the editing unit 110 with each other.

The processing unit 220 may include a data-selecting member 222, a data collection condition-setting member 224, a data process-setting member 226, a message-setting member 228 and a transmission-setting member 229.

The data-selecting member 222 may be configured to select collected data among the new data of the construction machine using the configuration file. The data-selecting member 222 may select the collected data among the new data in accordance with kinds of the new data, encoding/decoding ways of the new data, collection positions of the new data, etc. For example, when data of an engine RPM of the construction machine may be collected, the data-selecting member 222 may store a definition of the data of the engine RPM. The definition of the engine RPM may include a name of the data, an address of the data, the encoding way of the data, the decoding way of the data, etc.

The data collection condition-setting member 224 may be configured to set data collection conditions. The data collection condition-setting member 224 may set a data collection period. That is, the data collection condition-setting member 224 may periodically collect the data by a set time. Further, when the collected data may be satisfied with a specific condition, the data collection condition-setting member 224 may generate an event to collect the data. Alternatively, the data collection condition-setting member 224 may generate an event in accordance with a specific state of the construction machine to collect the data. For example, in the engine RPM, the data collection condition-setting member 224 may set a collection condition of the data with respect to the engine RPM at a time when a temperature of a cooling water may be above 80°C during the engine may be operated.

The data process-setting member 226 may be configured to set process ways of the data collected in accordance with the collection condition by the data collection condition-setting member 224. The data process-setting member 226 may decode the collected data. The data process-setting member 226 may calculate a maximum value and a minimum value among the collected data. The data process-setting member 226 may calculate an average value of the collected data. For example, in the engine RPM, the data process-setting member 226 may calculate a maximum value of an engine RPM during a period set by the data collection condition-setting member 224.

The message-setting member 228 may be configured to combine the collected data with each other to form a message. The message-setting member 228 may allot one data to a plurality of the messages. For example, during the engine may be operated, the message-setting member 228 may combine the data of the engine RPM collected when the temperature of the cooling water may be above 80°C, an average value of the engine RPM during the period, a maximum temperature of the cooling water, and a time and a position coordinate stored in the data processor 200 with each other to form one message. The message-setting member 228 may designate the message as an overheat message. The message-setting member 228 may form a complex message such as a message of the cooling water formed by combining the maximum temperature of the cooling water with other messages simultaneous with the overheat message.

The transmission-setting member 229 may be configured to set a prior order of the selected data to be transmitted to the receiving unit 140 of the server 100. Particularly, the transmission-setting member 229 may set a transmission time and transmission way of the data to the receiving unit 140 of the server 100. For example, when the transmission-setting member 229 may set the overheat message as a first transmission order, the transmitting unit 230 may first transmit the overheat message. The overheat message may be transmitted by a UDP way using a mobile communication capable of rapidly transmitting the data.

### Method of Processing Data of a Construction Machine

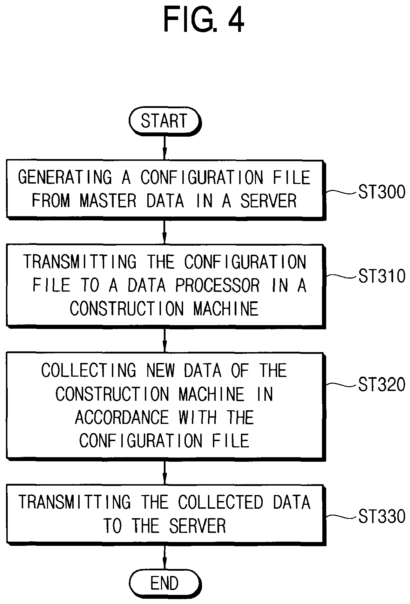

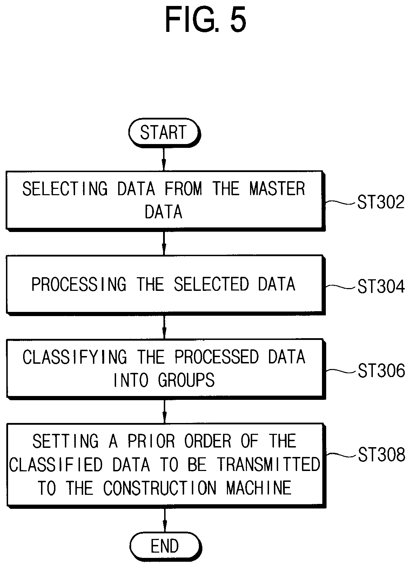

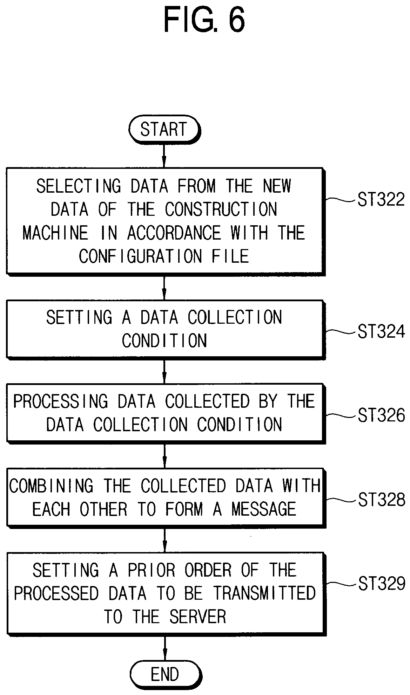

FIG. 4 is a flow chart illustrating a method of processing data of a construction machine using the apparatus in FIG. 1, FIG. 5 is a flow chart illustrating a method of generating a configuration file in the flow chart of FIG. 4, and FIG. 6 is a flow chart illustrating a method of collecting new data of a construction machine using a configuration file in the flow chart of FIG. 4.

Referring to FIGS. 4 to 6, in step ST300, the editing unit 110 may generate the configuration file from the master data stored in the storing unit 120. The master data may include the data collected from the construction machine. For example, the master data may include the inherent ID number, the source of the data, the data format, the encoding information of the data, etc. The data processor 200 may use the configuration file for collecting the new data of the construction machine.

Particularly, in step ST302, the data-selecting member 112 may select the collected data from the master data. In step ST304, the data-processing member 114 may process the data selected by the data-selecting member 112. In step ST306, the data-classifying member 116 may group the data processed by the data-processing member 114. In step ST308, the transmission-setting member 118 may set the prior order of the groups of the data classified by the data-classifying member 116 to be transmitted to the data processor 200.

In step ST310, the transmitting unit 130 of the server 100 may transmit the configuration file to the receiving unit 210 of the data processor 200. Thus, the server 100 and the data processor 200 may share one configuration file with each other.

In step ST320, the data processor 200 may selectively collect the new data of the construction machine in accordance with the configuration file.

Particularly, in step ST322, the data-selecting member 222 may select the collected data from the new data of the construction machine using the configuration file. The data-selecting member 222 may select the collected data among the new data in accordance with the kinds of the new data, the encoding/decoding ways of the new data, the collection positions of the new data, etc.

In step ST324, the data collection condition-setting member 224 may set the collection conditions of the data selected by the data-selecting member 222. The data collection condition-setting member 224 may periodically collect the data by the set time. Further, the data collection condition-setting member 224 may generate the event to collect the data when the collected data may be satisfied with the specific condition, or in accordance with the specific state of the construction machine.

In step ST326, the data process-setting member 226 may process the data selected in accordance with the collection condition set by the data collection condition-setting member 224. The data process-setting member 226 may decode the collected data. The data process-setting member 226 may calculate the maximum value and the minimum value of the collected data. The data process-setting member 226 may calculate the average value of the collected data.

In step ST328, the message-setting member 228 may combine the data processed by the data process-setting member 226 to form the message. The message-setting member 228 may allot one data to the plurality of the messages.

In step ST329, the transmission-setting member 229 may set the prior order of the collected data to be transmitted to the receiving unit 140 of the server 100.

In step ST330, the transmitting unit 230 of the data processor 200 may transmit the new data of the construction machine to the receiving unit 140 of the server 100. The new data may be stored in the storing unit 120 of the server 100.

According to example embodiments, the server and the data processor may share the configuration file generated from the master data of the construction machine with each other. Thus, one kind of the data-collecting unit and the software may be commonly applied to all of the construction machines. As a result, a communication cost, a management cost, a software cost used for updating the software may be remarkably reduced. Further, the data collection may use the configuration file reflecting user's needs so that desired data may be individually obtained to rapidly meet the various requirements of the user.

The foregoing is illustrative of example embodiments and is not to be construed as limiting thereof. Although a few example embodiments have been described, those skilled in the art will readily appreciate that many modifications are possible in the example embodiments without materially departing from the novel teachings and advantages of the present invention. Accordingly, all such modifications are intended to be included within the scope of the present invention as defined in the claims. In the claims, means-plus-function clauses are intended to cover the structures described herein as performing the recited function and not only structural equivalents but also equivalent structures. Therefore, it is to be understood that the foregoing is illustrative of various example embodiments and is not to be construed as limited to the specific example embodiments disclosed, and that modifications to the disclosed example embodiments, as well as other example embodiments, are intended to be included within the scope of the appended claims.

## Claims

1. A method of processing data of a construction machine, the method comprising:
generating a configuration file from a master data of the construction machine stored in a server;
transmitting the configuration file to the construction machine to share the configuration file between the server and the construction machine;
selectively collecting new data of the construction machine using the configuration file; and
transmitting the collected data to the server.

2. The method of claim 1, wherein generating the configuration file comprises:
selecting data from the master data;
processing the selected data;
grouping the processed data; and
setting a prior order of the grouped data to be transmitted to the construction machine.

3. The method of claim 1, wherein collecting the new data of the construction machine comprises:
selecting collected data from the new data of the construction machine;
setting a data collection condition;
processing the data selected by the data collection condition; and
setting a prior order of the processed data to be transmitted to the server.

4. The method of claim 3, wherein the collected data are selected in accordance with kinds of the data, encoding/decoding ways of the data and collection positions of the data.

5. The method of claim 3, wherein the data collection condition comprises a data collection period.

6. The method of claim 3, wherein processing the data comprises:
decoding the data;
calculating a maximum value and a minimum value of the data; and
calculating an average value of the data.

7. The method of claim 3, wherein collecting the new data of the construction machine further comprises combining the collected data with each other to form a message.

8. The method of claim 1, wherein the master data comprises an inherent identification (ID) number of the data, a source of the data, a data format and encoding information of the data.

9. An apparatus for of processing data of a construction machine, the apparatus comprising:
a server configured to generate a configuration file from a master data of the construction machine and to transmit the configuration file to the construction machine; and
a data processor installed at the construction machine, the data processor configured to share the configuration file with the server, to process the new data of the construction machine using the configuration file and to transmit the processed new data to the server.

10. The apparatus of claim 9, wherein the server comprises:
an editing unit configured to generate the configuration file;
a transmitting unit configured to transmit the configuration file to the construction machine;
a receiving unit configured to receive the new data of the construction machine; and
a storing unit configured to store the master data, the configuration file and the new data.

11. The apparatus of claim 10, wherein the editing unit comprises:
a data-selecting member configured to select the data from the master data;
a data-processing member configured to process the selected data;
a data-classifying member configured to classify the processed data into a plurality of groups; and
a transmission-setting member configured to set a prior order of the classified data to be transmitted to the data processor.

12. The apparatus of claim 9, wherein the data processor comprises:
a receiving unit configured to receive the configuration file from the server;
a processing unit configured to process the new data of the construction machine using the configuration file; and
a transmitting unit configured to transmit the processed data to the server.

13. The apparatus of claim 12, wherein the processing unit comprises:
a data-selecting member configured to select the data from the new data of the construction machine;
a data collection condition-setting member configured to set a data collection condition; and
a data process-setting member configured to set a data process way selected by the data collection condition.

14. A server for processing data of a construction machine, the server comprising:
an editing unit configured to generate a configuration file from a master data of the construction machine;
a transmitting unit configured to transmit the configuration file to the construction machine to share the configuration file between the construction machine and the server;
a receiving unit configured to receive the new data of the construction machine; and
a storing unit configured to store the master data, the configuration file and the new data.

15. The server of claim 14, wherein the editing unit comprises:
a data-selecting member configured to select the data from the master data;
a data-processing member configured to process the selected data;
a data-classifying member configured to classify the processed data into a plurality of groups; and
a transmission-setting member configured to set a prior order of the classified data to be transmitted to the data processor.

16. The data processor of a construction machine comprises:
a receiving unit configured to receive a configuration file, which is generated from master data of the construction machine, from a server;
a processing unit configured to process new data of the construction machine using the configuration file; and
a transmitting unit configured to transmit the processed data to the server.

17. The data processor of the construction machine of claim 16, wherein the processing unit comprises:
a data-selecting member configured to select the data from the new data of the construction machine;
a data collection condition-setting member configured to set a data collection condition; and
a data process-setting member configured to set a data process way selected by the data collection condition.

18. The data processor of the construction machine of claim 17, wherein the processing unit further comprises a message-setting member configured to combine the collected data with each other to form a message.

19. The data processor of the construction machine of claim 17, wherein the processing unit further comprises a transmission-setting member configured to a prior order of the selected data to be transmitted to the server.
